# FASCICULE DE BREVET EUROPEEN

(11) **EP 2 634 900 B1**
(45) Date de publication et mention de la délivrance du brevet: **15.11.2017**
(21) Numéro de dépôt: 13305159.9
(22) Date de dépôt: 08.02.2013
(51) Int. Cl.: H02M 1/08, H02M 5/293, H05B 39/04, H05B 33/08

(54) **Variateur électrique à deux fils**
Zweipolige Dimmerschaltung
Two-wire dimmer

(30) Priorité: 02.03.2012 FR 1200635
(43) Date de publication de la demande: 04.09.2013
(73) Titulaire: Legrand France, 87000 Limoges (FR); Legrand SNC, 87000 Limoges (FR)
(72) Inventeur: Lanjou, Sébastien, 87000 Limoges (FR); Coujean, Laurent, 87570 Rilhac Rancon (FR)
(74) Mandataire: Orsini, Fabienne

(56) Documents cités:
- EP-A1- 2 015 616
- FR-A1- 2 802 360
- FR-A1- 2 952 765
- JOOS G ET AL: "A NOVEL LINE SYNCHRONIZATION SCHEME FOR STATIC POWER CONVERTERS", PROCEEDINGS OF THE ANNUAL CONFERENCE OF THE INDUSTRIAL ELECTRONICS SOCIETY. (IECON). PHILADELPHIA, NOV. 6 - 10, 1989; [PROCEEDINGS OF THE ANNUAL CONFERENCE OF THE INDUSTRIAL ELECTRONICS SOCIETY. (IECON)], NEW YORK, IEEE, US, vol. 1 OF 04, 6 novembre 1989 (1989-11-06) , pages 136-142, XP000130621,

## Description

### DOMAINE TECHNIQUE AUQUEL SE RAPPORTE L'INVENTION

La présente invention concerne de manière générale l'alimentation électrique d'une charge telle qu'une lampe par un variateur électrique à deux fils.

Elle concerne plus particulièrement un variateur électrique tel que défini dans le préambule de la revendication 1.

### ARRIERE-PLAN TECHNOLOGIQUE

Un variateur électrique est un appareillage généralement installé sur une paroi d'une habitation, à la disposition des usagers, pour faire varier l'intensité lumineuse d'une ou de plusieurs lampes.

Le réseau électrique délivre une tension alternative périodique, dont chaque période forme une « alternance ». Le variateur électrique est alors conçu pour ne transmettre à la lampe qu'une partie de chaque demi-alternance de la tension alternative délivrée par le réseau électrique. On dit alors qu'il « coupe » la tension alternative.

On comprend que cette coupure doit être précisément synchronisée sur la tension alternative délivrée par le réseau électrique pour que l'intensité transmise à la charge reste constante d'une alternance à l'autre.

On connaît actuellement deux types de variateurs électriques : les variateurs dits « à deux fils » et les variateurs dits « à trois fils ».

Les variateurs à trois fils comportent une borne d'entrée connectée au réseau électrique local, une borne de sortie connectée à la charge, et une borne connecté au neutre. L'utilisation du neutre assure alors une bonne synchronisation de la coupure sur la tension alternative délivrée par le réseau électrique car le variateur électrique n'est pas soumis aux variations de tension induites par la charge.

Les variateurs à deux fils ne comportent quant à eux qu'une borne d'entrée connectée au réseau électrique local et une borne de sortie connectée à la charge. Ils sont donc connectés en série avec la charge, ce qui simplifie leur montage, notamment en cas de remplacement d'un ancien interrupteur par un variateur électrique. Ils ne sont en revanche pas connectés au neutre, ce qui rend leur synchronisation plus complexe.

On connaît du document FR 2 802 360 un variateur électrique à deux fils tel que défini en introduction, dont l'unité de synchronisation permet de synchroniser l'unité de pilotage sur la tension alternative délivrée par le réseau électrique, en transmettant à cette unité de pilotage un signal de synchronisation à chaque fois que la tension alternative passe par 0.

Si on constate un parfait fonctionnement de ce variateur électrique lorsque la charge présente un comportement électrique du type résistif (lampe à incandescence, ...), on observe en revanche un scintillement de la charge lorsque celle-ci présente un comportement électrique du type non-résistif (lampe à diodes électroluminescentes, lampe fluocompacte, ...). On remarque également que ce problème de scintillement est d'autant plus important que la charge comporte un nombre élevé de lampes aux comportements non-résistifs.

La demanderesse a remarqué que ce problème de scintillement était provoqué par les circuits électroniques embarqués dans ces lampes aux comportements non-résistifs. Ces circuits électroniques génèrent effectivement un effet de traîne (c'est-à-dire une tension résiduelle aux bornes de chaque lampe) qui a pour conséquence de déformer la tension électrique à laquelle se réfère l'unité de synchronisation pour synchroniser l'unité de pilotage.

La synchronisation de l'unité de pilotage étant alors basée sur un signal non périodique, elle est réalisée de manière aléatoire. On comprend donc que le pilotage de l'unité de puissance du variateur est réalisé de manière instable, ce qui provoque une coupure aléatoire de la tension alternative et donc des variations du courant transmis à la charge qui génèrent les scintillements observés.

On connaît par ailleurs du document Joos G et Al : "A novel line synchronization scheme for static power converters" (IECON 1989, Philadelphia, IEEE, US, vol.1/4, 6 novembre 1989, pages 136-142, XP000130621), un procédé de filtrage d'un signal permettant de réduire les effets de la distorsion d'un courant d'entrée.

On connaît également du document EP2015616 un procédé permettant de reconnaître le type de la charge branchée au variateur.

### OBJET DE L'INVENTION

Afin de remédier à l'inconvénient précité de l'état de la technique, la présente invention propose un variateur électrique dont l'unité de synchronisation n'est pas perturbée par les effets de traîne.

Plus particulièrement, on propose selon l'invention un variateur électrique tel que défini dans la revendication 1.

Le filtre stabilisateur est conçu pour transformer « la tension électrique admise à la borne d'entrée » (qui est différente de la tension aux bornes du réseau électrique local) de manière à la rendre périodique, à une fréquence égale à celle de la tension aux bornes du réseau électrique local. Le filtre tampon permet quant à lui d'éviter que le filtre stabilisateur ne déforme « la tension électrique admise à la borne d'entrée ».

L'étage stabilisé permet ainsi de délivrer un signal stabilisé et périodique, qui permette à l'unité de pilotage de commander l'unité de puissance de telle sorte que la charge ne scintille pas.

L'étage non stabilisé permet quant à lui de synchroniser dans des moments particuliers (notamment pendant que l'utilisateur fait varier l'intensité lumineuse de la charge à l'aide d'un bouton de commande) l'unité de pilotage d'une manière homologue à celle connue de l'état de la technique.

Ainsi, grâce à l'étage stabilisé, la synchronisation de l'unité de pilotage fonctionne quel que soit le type de la charge connectée au variateur électrique, qu'elle génère ou non des effets de traîne.

On notera par ailleurs que l'étage stabilisé génère le signal de synchronisation stabilisé sur la base de la tension délivrée à la borne d'entrée, si bien que la synchronisation fonctionne quelle que soit la tension locale (110 ou 220 ou 230 V) et quelle que soit la fréquence locale (50 ou 60 Hz).

D'autres caractéristiques avantageuses et non limitatives du variateur électrique conforme à l'invention sont définies dans les revendications 2 à 15.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique du circuit électrique du variateur électrique selon l'invention ;
- la figure 2 est une vue schématique de l'unité de synchronisation du variateur électrique de la figure 1 ;
- la figure 3 est un schéma électrique de l'unité de synchronisation de la figure 2 ;
- la figure 4 est un graphique illustrant les variations des tensions d'entrée et de sortie et du courant de sortie en fonction du temps, avec une lampe à incandescence pilotée en mode inductif ;
- la figure 5 est un graphique illustrant les variations des tensions d'entrée et de sortie et du courant de sortie en fonction du temps, avec une lampe à incandescence pilotée en mode capacitif ;
- la figure 6 est un graphique illustrant les variations des tensions d'entrée et de sortie et du courant de sortie en fonction du temps, avec une lampe fluocompacte pilotée en mode capacitif ;
- la figure 7 est un graphique illustrant les variations des tensions d'entrée et de sortie et du courant de sortie en fonction du temps, avec une lampe à diodes électroluminescentes pilotée en mode inductif ;
- la figure 8 est un graphique illustrant les variations de la tension d'entrée, du signal atténué et du signal de synchronisation non stabilisé en fonction du temps (les tensions et signaux n'étant pas représentés à la même échelle),
- la figure 9 est un graphique illustrant les variations du signal atténué, du signal filtré et du signal reconstitué en fonction du temps,
- la figure 10 est un algorithme de fonctionnement de l'unité de pilotage du variateur électrique de la figure 1, en mode inductif ;
- la figure 11 est un algorithme de fonctionnement de l'unité de pilotage du variateur électrique de la figure 1, en mode capacitif ;
- les figures 12 à 14 sont des graphiques illustrant les variations du signal filtré, du signal reconstitué et du signal de synchronisation stabilisé en fonction du temps, en mode capacitif.

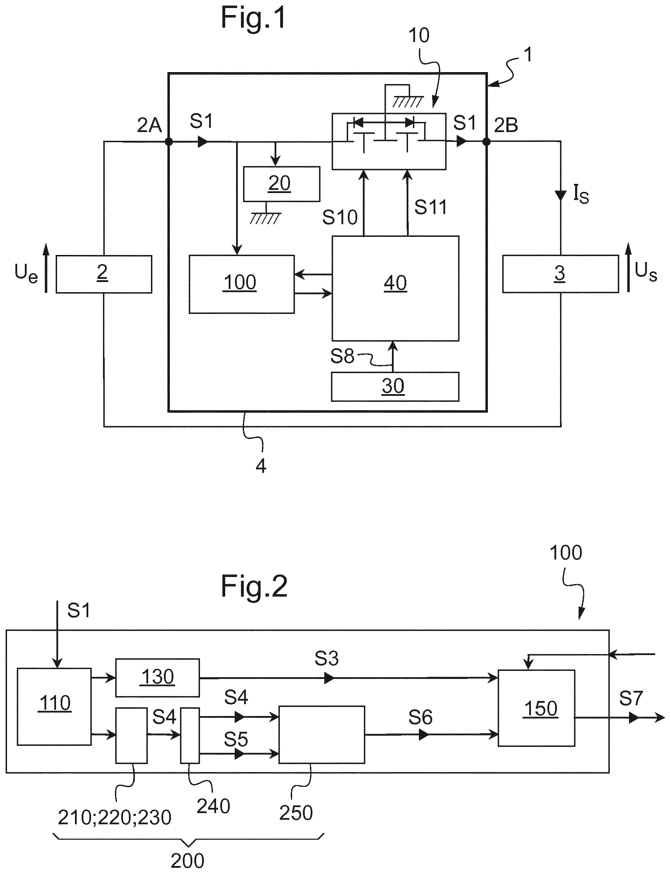

Sur la figure 1, on a représenté une charge 3 connectée à un réseau de distribution électrique 2 par l'intermédiaire d'un variateur électrique 1.

Le réseau de distribution électrique 2 délivre à ses bornes une tension alternative, appelée tension d'entrée Ue.

Cette tension d'entrée Ue est périodique. Chacune de ses périodes est composée d'une demi-alternance positive et d'une demi-alternance négative.

La fréquence et l'amplitude de cette tension d'entrée Ue varient d'un pays à l'autre. Sa fréquence pourra ainsi être égale à 50 ou 60 Hz. La tension pourra quant à elle être égale à 110, 220, 230 ou encore 240 V.

La charge 3 pourra quant à elle être formée d'une ou de plusieurs lampes, branchées en série ou en parallèle.

On distinguera ici trois types de charges 3 : les charges aux comportements résistifs (telles que les lampes à incandescence), celles aux comportements inductifs et celles aux comportements capacitifs (telles que les lampes à LED, pour « diodes électroluminescentes », et les lampes fluocompactes, pour « fluorescente compacte »). Ces différences de comportement s'expliquent notamment du fait des différences entre les circuits électroniques qu'elles embarquent.

La tension aux bornes de la charge 3 est appelée tension de sortie Us. Le courant passant dans cette charge 3 est appelée courant de sortie Is.

Le variateur électrique 1 est ici préférentiellement prévu pour s'intercaler sur le fil de phase qui relie le réseau de distribution électrique 2 à la charge 3. Il est donc dit « variateur à deux fils », puisqu'il ne comporte que deux bornes de connexion électrique, dont une borne d'entrée 2A connectée au réseau de distribution électrique 2 et une borne de sortie 2B connectée à la charge 3.

Ce variateur électrique 1 comporte une carte électronique 4 recouverte d'un capot enjoliveur (non représenté) duquel émerge un organe de commande (non représenté) actionnable par un usager.

Cet organe de commande pourra se présenter sous diverses formes, notamment sous la forme d'une roue pivotante ou de deux boutons sur lesquels sont respectivement représentés deux flèches, dont l'une pointe vers le haut et l'autre pointe vers le bas. Il sera utilisé par l'usager lorsque ce dernier souhaitera réduire ou augmenter l'intensité lumineuse développée par la charge 3.

Comme le montre bien la figure 1, la carte électrique 4 se compose de cinq blocs principaux, dont :
- une unité de puissance 10 dont l'entrée est directement connectée à la borne d'entrée 2A du variateur et dont la sortie est directement connectée à la borne de sortie 2B du variateur,
- une unité de pilotage 40 qui est adaptée à piloter l'unité de puissance 10,
- une unité de commande 30 qui permet de détecter tout mouvement de l'organe de commande imposé par l'usager, et qui est conçue pour transmettre à l'unité de pilotage 40 un signal de commande S8 relatif à ce mouvement,
- une unité de synchronisation 100 de l'unité de pilotage 40, et
- une unité d'alimentation 20 conçue pour, d'un côté, définir une masse, et, de l'autre, prélever une partie du courant circulant entre les bornes d'entrée 2A et de sortie 2B du variateur électrique 1 afin d'alimenter les différents composants de la carte électrique 4 du variateur électrique 1, à une tension d'alimentation Vcc.

L'unité de puissance 10 est prévue pour réduire la quantité de courant transmise à la charge 3 afin que celle-ci développe une intensité lumineuse égale à celle souhaitée par l'usager.

Cette unité de puissance 10, qui ne fait pas en propre l'objet de la présente invention, comporte à cet effet un circuit à transistors capable de découper la tension d'entrée Ue délivrée par le réseau de distribution électrique 2.

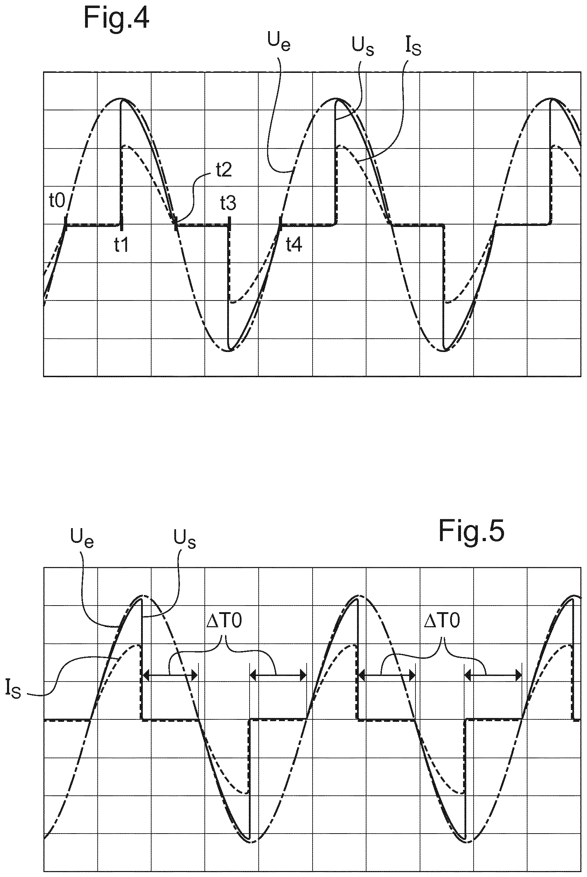

Comme cela apparaît par exemple sur la figure 5, chaque demi-alternance positive et négative de la tension de sortie Us est ainsi en partie découpée pendant une durée de coupure ΔT0, si bien que le courant moyen reçu par la charge 3 est réduit.

Ici, cette unité de puissance 10 comporte deux interrupteurs commandés bistables, tels que des transistors IGBT.

Son principe est connu et ne sera pas ici décrit plus en détail.

L'unité de pilotage 40 est alors notamment conçue pour commander la commutation de ces transistors IGBT.

En mode établi, c'est-à-dire lorsque l'organe de commande n'est pas actionné, l'unité de pilotage 40 permet d'ouvrir et de fermer régulièrement les transistors IGBT, à une fréquence égale à celle de la tension d'entrée Ue et de manière synchronisée avec celle-ci, pour que l'intensité de sortie Is traversant la charge 3 reste identique d'une alternance à l'autre.

En période transitoire, c'est-à-dire lorsqu'un utilisateur souhaite modifier l'intensité lumineuse émise par la charge 3, l'unité de pilotage 40 permet de faire varier la durée de coupure ΔT0 pour ajuster l'intensité de sortie Is traversant la charge 3.

Cette unité de pilotage 40 est ici formée d'un microcontrôleur adapté à émettre des signaux de pilotage S10, S11 vers les deux transistors IGBT pour les commuter.

Elle est adaptée à piloter les deux transistors IGBT suivant deux modes différents, selon que la charge 3 présente un comportement inductif ou capacitif. Si la charge 3 présente un comportement résistif, elle pourra être pilotée selon l'un ou l'autre de ces deux modes.

Pour cela, et de manière connue en soi (voir par exemple le document FR 2 802 360), l'unité de pilotage 40 comporte une mémoire dans laquelle est enregistrée une information représentative du type de la charge 3, qui est effacée à chaque fois que la charge 3 est déconnectée du variateur électrique 1 et qui est réinscrite à chaque fois que la charge 3 est connectée au variateur électrique 1 (des détecteurs ad hoc permettant alors de déterminer le type de la charge 3).

Comme le montre la figure 4, lorsque la charge est une lampe à incandescence et que le mode de pilotage choisi est inductif, la tension de sortie Us est coupée en début de chaque demi-alternance. On parle d'un pilotage en "fermeture de phase".

Comme le montre la figure 5, lorsque la charge est une lampe à incandescence et que le mode de pilotage choisi est capacitif, la tension de sortie Us est coupée en fin de chaque demi-alternance. On parle d'un pilotage en "ouverture de phase".

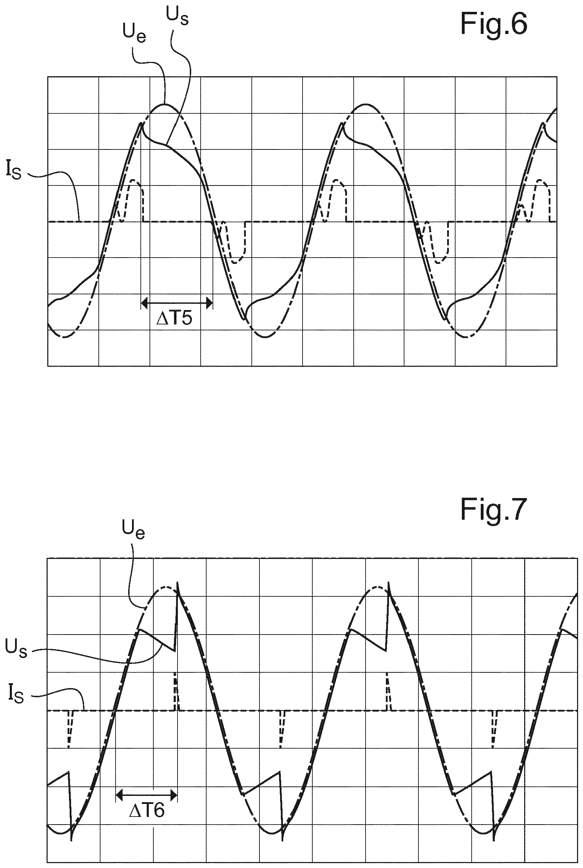

Comme le montre la figure 6, où la charge 3 est cette fois formée par une lampe à LED pilotée en mode capacitif, on observe que la tension de sortie Us est déformée pendant une durée ΔT5 par la tension résiduelle due à l'électronique embarquée dans la charge (on parle d'effet de traîne).

On observe le même effet de traîne sur la figure 7 où la charge 3 est formée par une lampe fluocompacte pilotée en mode inductif, puisque la tension de sortie Us y est déformée pendant une durée ΔT6.

Le signal électrique qui circule entre les deux bornes d'entrée 2A et de sortie 2B, que l'on appellera infra « signal d'entrée S1 », est alors perturbé par cet effet de traîne, si bien qu'il ne forme plus à lui seul une référence suffisamment fiable pour synchroniser la coupure de la tension de sortie Us par rapport à la tension d'entrée Ue.

L'unité de synchronisation 100 est alors conçue pour pallier les perturbations engendrées par cet effet de traîne.

Selon une caractéristique particulièrement avantageuse de l'invention, comme le montre bien la figure 2, cette unité de synchronisation 100 comporte à cet effet :
- un étage non stabilisé 130 qui est adapté à délivrer un signal de synchronisation non stabilisé S3, cadencé sur le signal d'entrée S1,
- un étage stabilisé 200, qui comporte un filtre tampon 220 suivi d'un filtre stabilisateur 230 pour filtrer le signal qu'il reçoit, et qui est adapté à délivrer un signal de synchronisation stabilisé S6 périodique, cadencé sur le signal ainsi filtré, et
- un étage de sélection 150 pour sélectionner l'un ou l'autre desdits signaux de synchronisation stabilisé S6 et non stabilisé S3.

Préférentiellement, cette unité de synchronisation 100 comporte également un étage d'atténuation 110 interposé entre, d'un côté, ladite borne d'entrée 2A, et, de l'autre, chacun des étages non stabilisé 130 et stabilisé 200.

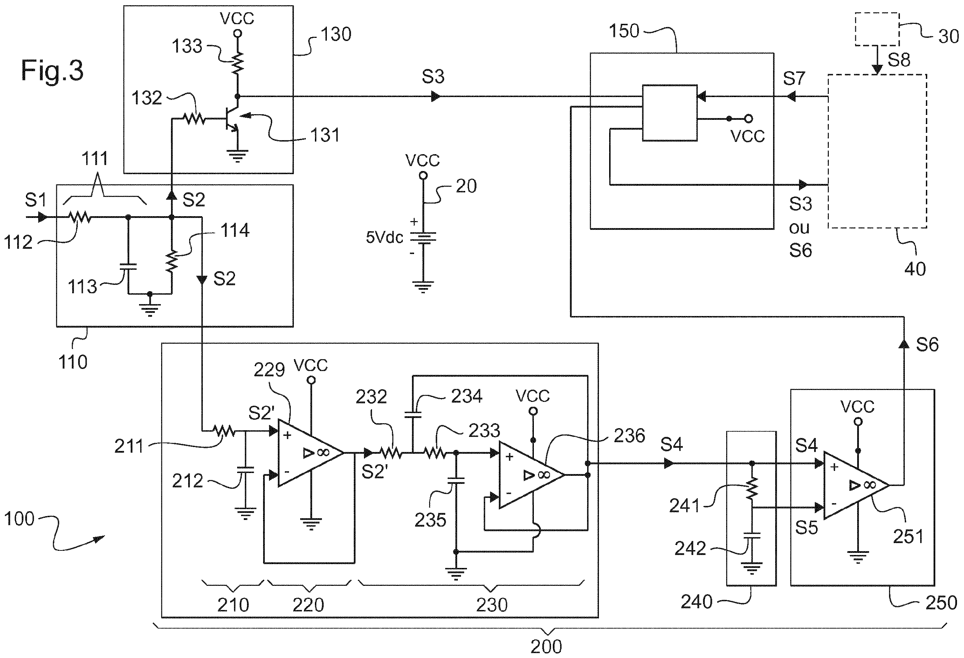

Comme le montre bien la figure 3, cet étage d'atténuation 110 forme l'entrée de l'unité de synchronisation 100 et est à cet effet connecté au conducteur électrique qui relie la borne d'entrée 2A à l'unité de puissance 10 du variateur électrique 1.

Cet étage d'atténuation 110 comporte un filtre passe-bas passif du premier ordre 111, qui comprend une résistance d'entrée 112 par laquelle arrive le signal d'entrée S1, et un condensateur 113 connecté à la masse. Cet étage d'atténuation 110 comporte également une résistance 114 branchée en parallèle du condensateur 113.

Ici, la résistance 112 présente une valeur de 440 kOhm.

Le condensateur 113 présente une capacité de 220 pF.

La résistance 114 présente une valeur de 47 kOhm.

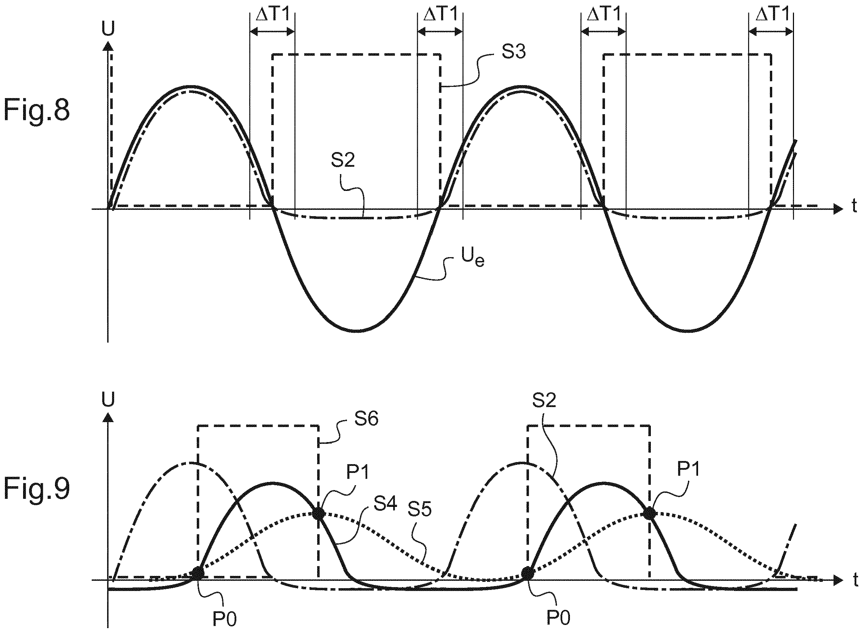

Cet étage d'atténuation 110 délivre en sortie un signal atténué S2 qui est synchronisé sur la tension d'entrée Ue et qui est mono-alterné en ce sens qu'il ne présente que des demi-alternances positives synchronisées sur les demi-alternances positives de la tension d'entrée Ue (voir figure 8, où la tension d'entrée Ue est représentée à une échelle différente de celle du signal atténué).

Grâce à cet étage d'atténuation 110, le signal atténué S2 présente une tension qui est inférieure à la tension d'alimentation Vcc et qui est ici environ égale à 2,5 V lorsque la tension d'entrée Ue est de 230 V.

Cet étage d'atténuation 110 permet ainsi d'éviter que le filtre tampon 220 ne sature, quelle que soit la tension d'entrée Ue (110, 220, 230 ou 240 V.) Il permet également de supprimer les perturbations de la tension d'entrée Ue et de limiter la consommation électrique de l'unité de synchronisation 100.

Comme le montre bien la figure 3, l'étage non stabilisé 130 reçoit en entrée ce signal atténué S2.

Il comporte ici un transistor bipolaire 131 piloté à l'état passant ou ouvert par le signal atténué S2.

Ce transistor bipolaire 131 présente ainsi une base connectée à la sortie de l'étage d'atténuation 110 via une résistance 132, un collecteur connecté à l'alimentation électrique Vcc via une résistance 133 et un émetteur connecté à la masse.

Ce transistor bipolaire 131 présente un gain élevé, au moins supérieur à 100 et préférentiellement supérieur à 400, de manière à pouvoir commuter rapidement et à une fréquence élevée, supérieure à 120 Hz.

La résistance 132 présente une valeur de 5,6 kOhm.

La résistance 133 présente une valeur de 100 kOhm.

Cet étage non stabilisé 130 permet ainsi de générer un signal non stabilisé S3 en forme de créneaux (voir figure 8), quelle que soit la tension d'entrée (110, 220, 230 ou 240 V) et la fréquence (50 ou 60 Hz) du réseau de distribution électrique 2.

Ce signal non stabilisé S3 est périodique lorsque la charge 3 est du type résistif (la charge 3 ne générant alors pas d'effet de traîne). Ses fronts descendants sont alors générés à une fréquence constante, correctement cadencée par rapport à la tension d'entrée Ue.

Ce signal non stabilisé S3 n'est en revanche plus périodique dès lors que la charge 3 est d'un type capacitif ou inductif. Comme cela est représenté sur la figure 8, les fronts montants et descendants du signal non stabilisé S3 peuvent alors, à cause des effets de traîne, se décaler sur un intervalle de temps ΔT1 d'environ 1 ms.

Comme le montre la figure 3, l'étage stabilisé 200 reçoit également en entrée le signal atténué S2.

Cet étage stabilisé 200 est alors conçu pour traiter ce signal atténué S2 de manière à générer un signal de synchronisation stabilisé S6 qui soit périodique quel que soit le type de la charge 3.

Il comporte à cet effet, outre les filtres tampon 220 et stabilisateur 230, un filtre d'entrée 210, un générateur de signal 240 et un comparateur 250.

Le filtre d'entrée 210 est un filtre passe-bas passif du premier ordre qui reçoit le signal atténué S2 et qui transmet un signal intégré S2'.

Il comporte une résistance 211 par laquelle arrive le signal atténué S2 et un condensateur 212 connecté à la masse.

Ici, la résistance 211 présente une valeur de 100 kOhm.

Le condensateur 113 présente une capacité de 1 nFarad.

Ce filtre d'entrée 210 présente alors une fréquence de coupure de 1,6kHz, qui lui permet d'éliminer du signal atténué S2 la quasi totalité des parasites de fréquences supérieures à cette fréquence de coupure.

Le filtre tampon 220 est situé entre ce filtre d'entrée 210 et le filtre stabilisateur 230, de manière à éviter que le filtre stabilisateur 230 ne perturbe le signal atténué S2 et ne brouille le signal de synchronisation non stabilisé S3.

Ce filtre tampon 220 est à cet effet choisi pour présenter une grande impédance d'entrée, au moins supérieure à 1 MOhm.

Il comporte alors ici un amplificateur opérationnel 229 en montage suiveur, qui reçoit sur son entrée positive le signal intégré S2' et dont l'entrée négative est branchée sur sa sortie. Ce montage présente un gain sensiblement égal à 1, si bien que le signal en sortie de cet amplificateur opérationnel 221 est sensiblement le même que le signal intégré S2'.

Comme le montre la figure 3, le filtre stabilisateur 230 est alors situé à la sortie de ce filtre tampon 220, pour transformer le signal intégré S2' en un signal périodique de fréquence égale à celle de la tension d'entrée Ue, quel que soit le type de la charge 3.

Il comporte à cet effet ici un amplificateur opérationnel 236 en montage passe-bas du second ordre, dont la fréquence de coupure est choisie légèrement supérieure à la fréquence maximale des réseaux de distribution électrique que l'on peut rencontrer dans le monde, soit légèrement supérieure à 60 Hz.

L'entrée négative de cet amplificateur opérationnel 231 est branchée sur sa sortie. L'entrée positive de cet amplificateur opérationnel 231 est branchée sur la sortie du filtre tampon 220 via deux résistances 232, 233. Elle est également branchée sur la masse via un condensateur 235. Elle est aussi branchée sur sa sortie via ladite résistance 233 et un condensateur 234.

Ici, la résistance 232 présente une valeur de 22 kOhm.

La résistance 233 présente une valeur de 82 kOhm.

Le condensateur 234 présente une capacité de 220 nFarad.

Le condensateur 235 présente une capacité de 22 nFarad.

La fréquence de coupure de cet amplificateur opérationnel 231 est donc ici égale à 63 Hz.

Ce filtre stabilisateur 230 intègre alors fortement le signal intégré S2' au-dessus de cette fréquence de coupure, ce qui permet de supprimer du signal intégré S2' les perturbations dues à l'effet de traîne. Il génère ainsi en sortie un signal filtré S4 de période égale à celle de la tension d'entrée Ue, mais qui est déphasé par rapport à celle-ci (voir figure 9).

On observe à ce stade que le retard du signal filtré S4 sur la tension d'entrée Ue dépend notamment de l'intensité lumineuse émise par la charge 3 (c'est-à-dire du courant I3 passant dans la charge 3), ainsi que de la tension (110, 220, 230 ou 240 V) et de la fréquence (50 ou 60 Hz) du réseau de distribution électrique 2.

Le générateur de signal 240 et le comparateur 250 sont alors prévus pour transformer ce signal filtré S4 en un signal carré de fréquence identique, appelé « signal de synchronisation stabilisé S6 ».

Le générateur de signal 240 est alors plus précisément conçu pour générer un signal de référence, appelé ici « signal reconstitué S5 », dont l'intersection avec le signal filtré S4 intervient périodiquement, telle un métronome réglé sur la période de la tension d'entrée Ue (avec un retard inconnu).

Il comporte à cet effet un filtre passe-bas passif du premier ordre dont l'entrée est branchée sur la sortie du filtre stabilisateur 230 pour recevoir le signal filtré S4. Il comprend ainsi une résistance 241 par laquelle arrive le signal filtré S4 et un condensateur 242 connecté à la masse.

Ici, la résistance 241 présente une valeur de 100 kOhm.

Le condensateur 242 présente une capacité de 47 nFarad.

Le comparateur 250 comporte quant à lui un amplificateur opérationnel 251 en montage comparateur, dont l'entrée positive est branchée à la sortie du filtre stabilisateur 230 et dont l'entrée négative est branchée à la sortie du générateur de signal 240.

Le signal de synchronisation stabilisé S6 généré à la sortie de ce comparateur 250 est alors de forme carrée (voir figure 9). Ses fronts montants correspondent à des premières intersections P0 du signal filtré S4 et du signal reconstitué S5, tandis que ses fronts descendants correspondent à des secondes intersections P1 du signal filtré S4 et du signal reconstitué S5, alternées avec lesdites premières intersections P0.

On observe sur cette figure 9 que les positions des secondes intersections sont beaucoup plus nettes que celles des premières intersections P0 où les signaux filtré S4 et reconstitué S5 sont presque tangents. Ce seront donc ici les fronts descendants du signal de synchronisation stabilisé S6 qui fourniront la synchronisation de l'unité de pilotage 40.

On remarquera par ailleurs que les signaux filtré S4 et reconstitué S5 varieront de manière homologues lorsqu'on changera de réseau de distribution électrique 2. La tension (110, 220, 230 ou 240 V) et la fréquence (50 ou 60 Hz) du réseau de distribution électrique 2 seront donc sans influence sur la synchronisation fournie par le signal de synchronisation stabilisé S6.

Tel que représenté sur la figure 3, l'étage de sélection 150 reçoit en entrée les deux signaux de synchronisation stabilisé S6 et non stabilisé S3. Il est commandé par un signal S7 émis par l'unité de pilotage 40 pour sélectionner l'un ou l'autre de ces deux signaux de synchronisation stabilisé S6 et non stabilisé S3.

En pratique, cet étage de sélection 150 sera intégré au microcontrôleur de l'unité de pilotage 40.

La synchronisation de l'unité de pilotage 40 pourra alors être réalisée directement sur la base du signal S3, S6 sélectionné (comme cela sera présenté en mode inductif), ou sur la base d'un signal S9 issu du signal S3, S6 sélectionné (comme cela sera présenté en mode capacitif).

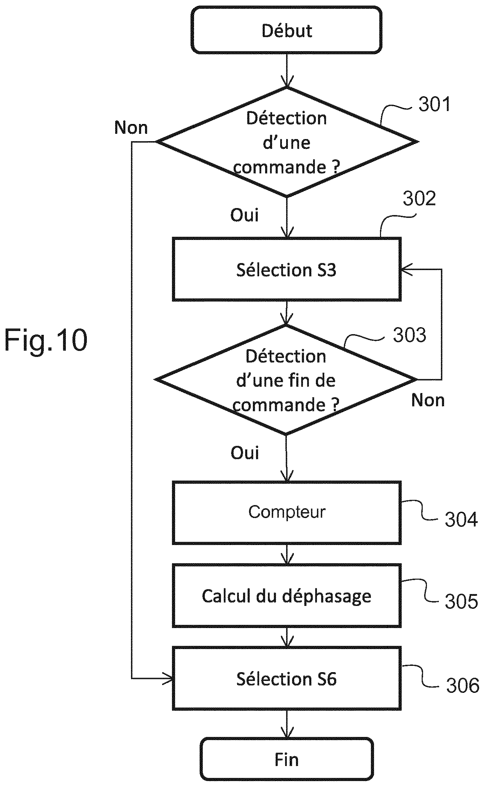

En mode inductif, la sélection de l'un ou l'autre de ces signaux de synchronisation stabilisé S6 et non stabilisé S3 sera alors réalisée par l'unité de pilotage 40 suivant l'algorithme représenté sur la figure 10.

Comme le montre la figure 10, à chaque réinitialisation de l'algorithme, l'unité de pilotage 40 décèle si elle reçoit de l'unité de commande 30 un signal de commande S8 (étape 301).

En l'absence de signal de commande S8, l'unité de pilotage 40 sélectionne le signal de synchronisation stabilisé S6 pour synchroniser la commutation de l'unité de puissance 10 sur la tension d'entrée Ue (voir étape 306 infra).

En revanche, en présence d'un signal de commande S8 (ce qui signifie que l'usager souhaite changer l'intensité lumineuse émise par la charge 3), l'unité de pilotage 40 :
- modifie le pilotage de la commutation de l'unité de puissance 10 de telle manière que l'intensité de sortie I3 reçue par la charge 3 augmente ou décroisse jusqu'à la valeur souhaitée par l'usager, et
- sélectionne simultanément le signal de synchronisation non stabilisé S3 pour synchroniser le découpage de la tension d'entrée Ue (étape 302).

Ainsi, lors du réglage de l'intensité lumineuse émise par la charge 3, la synchronisation n'est plus basée sur le signal de synchronisation stabilisé S6 mais sur le signal de synchronisation non stabilisé S3. On constate en effet que le retard du signal de synchronisation stabilisé S6 sur la tension d'entrée Ue varie pendant l'ensemble de la durée du réglage, alors que le signal de synchronisation non stabilisé S3 reste plus ou moins en phase avec la tension d'entrée Ue (avec une période qui n'est toutefois pas rigoureusement constante).

L'unité de pilotage 40 attend alors la fin du réglage de l'intensité lumineuse par l'utilisateur au moyen de l'unité de commande 30 (étape 303).

Puis, lorsque le réglage est terminé et que le signal de commande S8 revient à zéro, l'unité de pilotage 40 déclenche un compteur de périodes (étape 304) qui compte le nombre de périodes du signal de synchronisation non stabilisé S3 de manière à ce que, lorsque le compteur a atteint un nombre prédéterminé de périodes, l'unité de pilotage 40 sélectionne le signal de synchronisation stabilisé S6 (étape 306).

Le nombre prédéterminé de périodes est choisi supérieur ou égal à 2. Il est ici choisi égal à 4.

Ce compteur de périodes laisse alors à l'unité de pilotage 40 un délai durant lequel il mesure le retard du signal de synchronisation stabilisé S6 sur la tension d'entrée Ue (étape 305). Cette mesure est alors réalisée non pas durant une seule période, mais bien durant ces quatre périodes, pour la raison suivante.

Comme cela a été précisé précédemment, le retard du signal de synchronisation stabilisé S6 sur la tension d'entrée Ue est constant (une fois le réglage terminé). Il est toutefois ici estimé en fonction du retard mesuré entre le signal de synchronisation stabilisé S6 et le signal de synchronisation non stabilisé S3. Or, comme cela apparaît sur la figure 8, ce signal de synchronisation non stabilisé S3 ne présente pas une période constante (voir les variations ΔT1). Le retard mesuré va donc varier d'une alternance à l'autre. Par conséquent, une fois le réglage terminé, on mesure le retard du signal de synchronisation stabilisé S6 sur le signal de synchronisation non stabilisé S3 pendant quatre périodes consécutives, et on effectue la moyenne de ce retard afin d'estimer le retard du signal de synchronisation stabilisé S6 sur la tension d'entrée Ue.

A l'issue de ces quatre périodes, l'unité de pilotage 40 sélectionne le signal de synchronisation stabilisé S6, puis elle déphase ce signal de synchronisation stabilisé S6 du retard moyenné, et enfin elle commande l'unité de puissance 10 de façon à découper la tension d'entrée Ue de manière synchronisée avec ce signal de synchronisation stabilisé S6 déphasé.

Ainsi peut-elle commander, comme le montre la figure 4, la commutation de l'unité de puissance 10 aux instants t0, t2, t4 (correspondant aux débuts et fins de chaque demi-alternance de la tension d'entrée Ue) et aux instants t1 et t3, de manière à permettre le passage du courant vers la charge 3 entre les instants t1 et t2 et entre les instants t3 et t4 et à bloquer le courant le reste du temps.

De cette manière, en mode établi, le courant de sortie I3 traversant la charge 3 reste parfaitement stable d'une demi-alternance à l'autre, ce qui évite à la charge 3 de scintiller.

En mode capacitif, la sélection de l'un ou l'autre des signaux de synchronisation stabilisé S6 et non stabilisé S3 (étapes 301 à 306) est réalisée sensiblement de la même manière qu'en mode inductif, comme le montre l'algorithme représenté sur la figure 10.

Puis, en mode établi, c'est-à-dire lorsque le signal sélectionné est le signal de synchronisation stabilisé S6, l'unité de pilotage 40 modifie ce signal en un signal final S9 permettant de fournir une synchronisation particulièrement sûre.

Ce signal final S9 est un signal carré présentant, pour chaque alternance de la tension d'entrée Ue, trois fronts déclenchés successivement de la manière suivante.

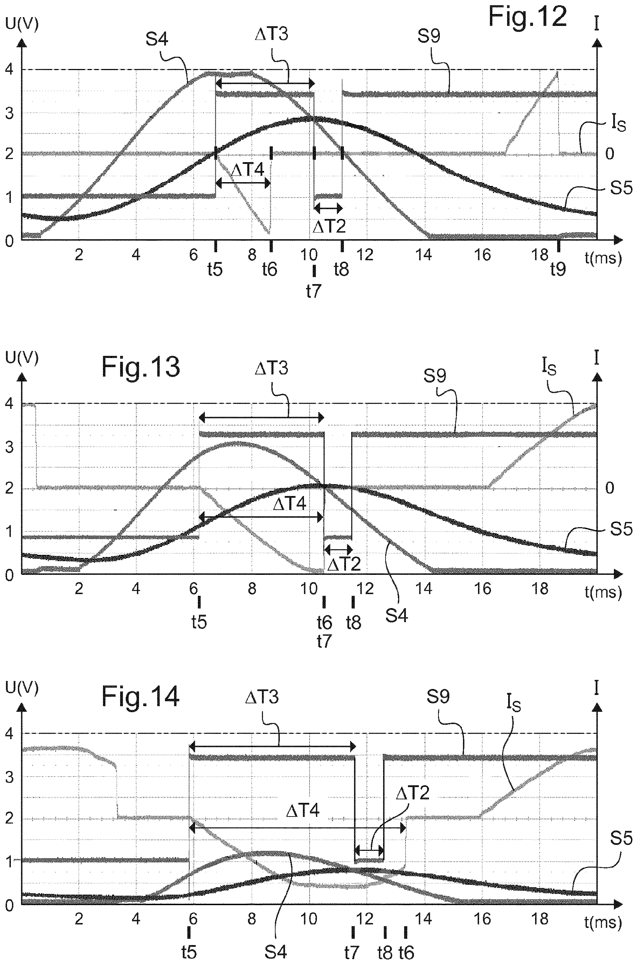

Comme le montrent les figures 12 à 14, le signal final S9 présente un premier front (montant ou descendant) au début de chaque demi-alternance négative (instant t5), un second front (montant ou descendant) au croisement des signaux reconstitué S5 et filtré S4 (instant t7), et un troisième front (montant ou descendant) après un délai prédéterminé ΔT2 (instant t8). Sur ces figures, on observe que l'instant t6 correspond au moment où la coupure de la tension de sortie Us est commandée.

Puisqu'à chaque alternance, le signal S9 présente un nombre impair de fronts (trois), les premier front (instant t5), second front (instant t7) et troisième front (instant t8) seront alternativement des fronts montants et descendants.

Le second front (instant t7) est celui qui commande la synchronisation de l'unité de pilotage 40. Il est donc déclenché à chaque croisement des signaux reconstitué S5 et filtré S4 où le signal filtré S4 est décroissant. C'est en effet à ces croisements que les signaux reconstitué S5 et filtré S4 sont les moins tangents, ce qui assure une bonne précision dans la détection du second front.

Le premier front (instant t5) est alors choisi de telle manière qu'après l'instant t5, le premier croisement des signaux reconstitué S5 et filtré S4 soit celui où le signal filtré S4 est décroissant. Il est ici plus précisément déclenché à chaque front montant du signal de synchronisation non stabilisé S3.

Le troisième front (instant t8) est déclenché à la suite du second front (instant t7), après le délai prédéterminé ΔT2, ce qui évite tout déclenchement intempestif des autres fronts durant ce délai. Ainsi, grâce à ce troisième front, si les signaux reconstitué S5 et filtré S4 se croisent plusieurs fois dans un délai réduit (du fait des imprécisions de mesure et/ou du fait de leurs positions tangentes et/ou du bruit), aucun autre premier et/ou second front n'est déclenché durant ce délai prédéterminé ΔT2.

Pour accomplir parfaitement sa fonction, le délai prédéterminé ΔT2 est de préférence supérieur à 0,5 ms. Il sera aussi avantageusement choisi inférieur à 2 ms. Il est ici choisi égal à 1 ms.

Comme le montrent respectivement les figures 12 à 14, le second front (instant t7) et la commande de coupure (instant t6) peuvent intervenir l'un avant l'autre (cas 1), simultanément (cas 2), ou l'un après l'autre (cas 3).

Dès lors, la séquence de pilotage des transistors IGBT ne sera pas la même suivant les cas.

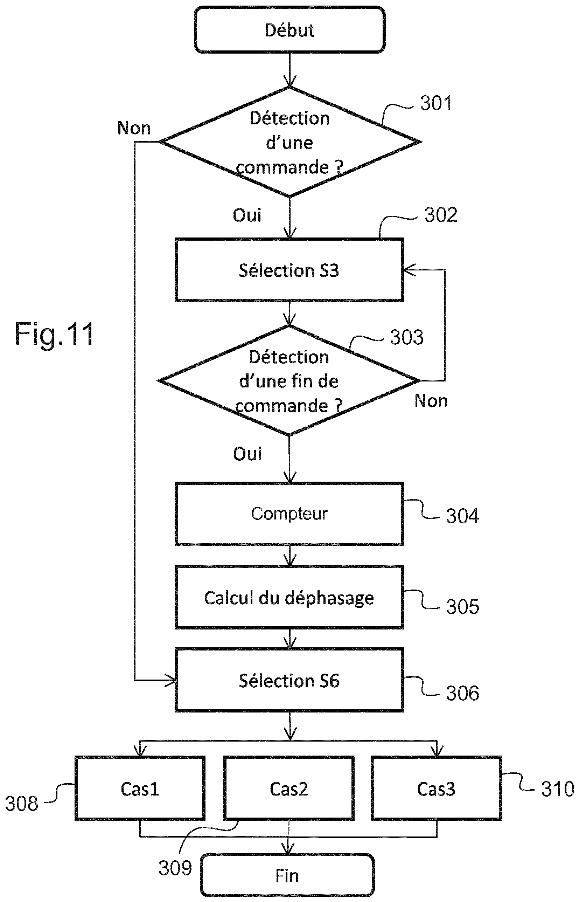

Par conséquent, comme le montre la figure 11, lors du passage en régime établi (à l'issue de l'étape 305), le microcontrôleur de l'unité de pilotage 40 calcule la durée ΔT3 séparant les instants t5 et t7, ainsi que la durée ΔT4 séparant les instants t5 et t6.

Il compare alors ces deux durées ΔT3, ΔT4 pour déterminer dans quel cas il se trouve.

Plus précisément, si la durée ΔT3 est supérieure à la durée ΔT4, l'unité de pilotage 40 se place dans le cas 1 (étape 308 & figure 12). Dans ce cas, elle est alors programmée pour que le premier évènement qu'elle commande après le second front (instant t7) soit la coupure d'une demi-alternance positive (instant t9).

Au contraire, si la durée ΔT3 est inférieure à la durée ΔT4, l'unité de pilotage 40 se place dans le cas 3 (étape 310 & figure 14). Dans ce cas, elle est alors programmée pour que le premier évènement qu'elle commande après le second front (instant t7) soit la coupure de la demi-alternance négative (instant t6).

Enfin, si la durée ΔT3 est égale à la durée ΔT4, l'unité de pilotage 40 se place dans le cas 2 (étape 309 & figure 13). Elle est alors programmée pour commander la coupure de la demi-alternance négative (instant t6) au moment du second front (instant t7). Les instants t6 et t7 se situant au même instant, la commande est immédiate.

La présente invention n'est nullement limitée aux modes de réalisation décrits et représentés, mais l'homme du métier saura y apporter toute variante conforme à son esprit.

En particulier, en mode inductif, on pourra prévoir que l'unité de pilotage modifie le signal de synchronisation stabilisé en un signal final du type de celui représenté sur la figure 12 afin de fournir une synchronisation particulièrement sûre.

Selon une autre variante, on pourra prévoir que le comparateur (250) soit intégré au microcontrôleur de l'unité de pilotage.

On pourrait par ailleurs prévoir que l'étage non stabilisé (130) comporte deux transistors bipolaires en cascade, afin de réduire sa consommation électrique et d'augmenter son gain.

Encore en variante, on pourra prévoir que le signal émis par le générateur de signal (240) soit un signal continu. Toutefois, dans cette variante, le signal émis par le générateur de signal ne variera pas automatiquement avec le signal filtré (S4) en fonction de l'intensité de sortie, ou de la tension d'entrée (110, 220, 230 ou 240 V). Il sera alors préférable d'adapter la valeur de la tension continue en fonction de l'intensité de sortie et de la tension d'entrée, de manière à assurer que le signal filtré et le signal continu se croisent bien et qu'ils se croisent à un instant où la pente du signal filtré est maximale.

On pourrait également prévoir de supprimer le générateur de signal (240), et de prévoir un comparateur qui puisse détecter à quel moment et dans quelles conditions (notamment avec quelle pente) le signal filtré atteint une valeur prédéterminée.

## Revendications

1. Variateur électrique (1) comportant :
- deux uniques bornes de connexion (2A, 2B), dont une borne d'entrée (2A) à connecter à un réseau électrique local (2) et une borne de sortie (2B) à connecter à une charge électrique (3),
- une unité de puissance (10) qui est interposée entre lesdites bornes de connexion (2A, 2B) pour couper périodiquement une partie de la tension électrique délivrée à ladite borne de sortie (2B),
- une unité de pilotage (40) adaptée à piloter ladite unité de puissance (10) pour modifier la durée de coupure de la tension électrique délivrée à ladite borne de sortie (2B), et
- une unité de synchronisation (100) de l'unité de pilotage (40),
**caractérisé en ce que** ladite unité de synchronisation (100) comporte :
- un étage non stabilisé (130) qui est adapté à délivrer un signal de synchronisation non stabilisé (S3), synchronisé sur la tension électrique admise à ladite borne d'entrée (2A),
- un étage stabilisé (200), comportant un filtre tampon (220) suivi d'un filtre stabilisateur (230), qui est adapté à délivrer un signal de synchronisation stabilisé (S6) périodique, synchronisé sur la tension électrique qui est admise à ladite borne d'entrée (2A) puis qui est filtrée par lesdits filtre tampon (220) et filtre stabilisateur (230), et
- un étage de sélection (150) pour sélectionner l'un ou l'autre desdits signaux de synchronisation stabilisé (S6) et non stabilisé (S3).

2. Variateur électrique (1) selon la revendication précédente, dans lequel ledit filtre tampon (220) présente une grande impédance d'entrée, au moins supérieure à 1 MOhm.

3. Variateur électrique (1) selon la revendication précédente, dans lequel ledit filtre tampon (220) comporte un amplificateur opérationnel (221) en montage suiveur.

4. Variateur électrique (1) selon l'une des revendications précédentes, dans lequel ledit filtre stabilisateur (230) comporte un amplificateur opérationnel (231) en montage passe-bas.

5. Variateur électrique (1) selon la revendication précédente, dans lequel ledit montage passe-bas est du second ordre.

6. Variateur électrique selon l'une des revendications précédentes, dans lequel ledit étage stabilisé (200) comporte, à l'entrée dudit filtre tampon (220), un filtre passe-bas passif du premier ordre (210).

7. Variateur électrique selon l'une des revendications précédentes, dans lequel, ledit filtre stabilisateur (230) émettant un premier signal (S4) périodique, ledit étage stabilisé (200) comporte :
- un générateur de signal (240) qui délivre un second signal (S5), et
- un comparateur (250) qui génère ledit signal de synchronisation stabilisé (S6) en fonction dudit premier signal (S4) et dudit second signal (S5).

8. Variateur électrique selon la revendication précédente, dans lequel ladite unité de pilotage (40) comporte un microcontrôleur et dans lequel ledit comparateur (250) est intégré audit microcontrôleur.

9. Variateur électrique selon l'une des deux revendications précédentes, dans lequel ledit générateur de signal (240) comporte un filtre passe-bas passif du premier ordre, dont l'entrée reçoit le premier signal (S4) et dont la sortie génère le second signal (S5).

10. Variateur électrique (1) selon l'une des revendications précédentes, dans lequel ledit étage non stabilisé (130) comporte au moins un transistor (131) qui présente un gain de préférence supérieur à 100.

11. Variateur électrique selon l'une des revendications précédentes, dans lequel il est prévu une unité de commande (30) qui est actionnable par un usager et qui est adaptée à transmettre un signal de commande (S8) à ladite unité de pilotage (40), et dans lequel ledit étage de sélection (150) est piloté par ladite unité de pilotage (40) pour sélectionner le signal de synchronisation non stabilisé (S3) lorsque ladite unité de commande (30) est actionnée.

12. Variateur électrique (1) selon la revendication précédente, dans lequel ledit étage de sélection (150) est piloté par ladite unité de pilotage (40) pour sélectionner :
- le signal de synchronisation non stabilisé (S3) pendant une durée prédéterminée après que ladite unité de commande (30) n'est plus actionnée, puis
- le signal de synchronisation stabilisé (S6) tant que ladite unité de commande (30) n'est pas actionnée à nouveau.

13. Variateur électrique (1) selon la revendication précédente, dans lequel ladite unité de pilotage (40) comporte des moyens de mesure du retard du signal de synchronisation stabilisé (S6) sur le signal de synchronisation non stabilisé (S3).

14. Variateur électrique selon l'une des revendications précédentes, dans lequel ladite unité de pilotage (40) comporte un microcontrôleur et dans lequel ledit étage de sélection (150) est intégré audit microcontrôleur.

15. Variateur électrique (1) selon l'une des revendications précédentes, dans lequel il est prévu un étage d'atténuation (110) interposé entre, d'un côté, ladite borne d'entrée (2A), et, de l'autre, chacun des étages non stabilisé (130) et stabilisé (200), ledit étage d'atténuation (110) comportant de préférence un filtre passe-bas passif du premier ordre (111).

## Patentansprüche

1. Dimmerschaltung (1) mit
- zwei Anschlüssen (2A, 2B), und zwar einem Eingangsanschluß (2A) zum Verbinden mit einem lokalen Stromnetz (2) und einem Ausgangsanschluß (2B) zum Verbinden mit einer elektrischen Last (3),
- einer Leistungseinheit (10), die zwischen die beiden Anschlüsse (2A, 2B) geschaltet ist, um einen Teil der am Ausgangsanschluß (2B) abgegebenen elektrischen Spannung periodisch abzuschalten,
- einer Steuereinheit (40), die dazu ausgelegt ist, die Leistungseinheit (10) zu steuern, um die Abschaltdauer der am Ausgangsanschluß (2B) abgegebenen elektrischen Spannung zu modifizieren, und
- einer Einheit (100) zum Synchronisieren der Steuereinheit (40), **dadurch gekennzeichnet, daß** die Synchronisationseinheit (100)
- eine nicht stabilisierte Stufe (130), die dazu ausgelegt ist, ein nicht stabilisiertes Synchronisationssignal (S3) abzugeben, das mit der am Eingangsanschluß (2A) angelegten elektrischen Spannung synchronisiert ist,
- eine ein Pufferfilter (220) und ein anschließendes Stabilisationsfilter (230) aufweisende stabilisierte Stufe (200), die dazu ausgelegt ist, ein periodisches stabilisiertes Synchronisationssignal (S6) abzugeben, das mit der am Eingangsanschluß (2A) angelegten elektrischen Spannung synchronisiert und dann durch das Pufferfilter (220) und das Stabilisationsfilter (230) gefiltert ist, und
- eine Auswahlstufe (150) zum Auswählen zwischen dem stabilisierten (S6) und dem nicht stabilisierten (S3) Synchronisationssignal aufweist.

2. Dimmerschaltung (1) gemäß dem vorangehenden Anspruch, bei der das Pufferfilter (220) eine hohe Eingangsimpedanz von wenigstens 1 MΩ aufweist.

3. Dimmerschaltung (1) gemäß dem vorangehenden Anspruch, bei der das Pufferfilter (220) einen Operationsverstärker (221) in Folgerschaltung aufweist.

4. Dimmerschaltung (1) gemäß einem der vorangehenden Ansprüche, bei der das Stabilisationsfilter (230) einen Operationsverstärker (231) in Tiefpaßschaltung aufweist.

5. Dimmerschaltung (1) gemäß dem vorangehenden Anspruch, bei der die Tiefpaßschaltung zweiter Ordnung ist.

6. Dimmerschaltung (1) gemäß einem der vorangehenden Ansprüche, bei der die stabilisierte Stufe (200) am Eingang des Pufferfilters (220) ein passives Tiefpaßfilter erster Ordnung (210) aufweist.

7. Dimmerschaltung (1) gemäß einem der vorangehenden Ansprüche, bei der das Stabilisationsfilter (230) ein periodisches erstes Signal (S4) abgibt und die stabilisierte Stufe (200)
- einen Signalgenerator (240), der ein zweites Signal (S5) abgibt, und
- einen Komparator (250), der das stabilisierte Synchronisationssignal (S6) in Abhängigkeit vom ersten Signal (S4) und vom zweiten Signal (S5) erzeugt,
aufweist.

8. Dimmerschaltung (1) gemäß dem vorangehenden Anspruch, bei der die Steuereinheit (40) einen Mikrocontroller aufweist und bei der der Komparator (250) im Mikrocontroller integriert ist.

9. Dimmerschaltung (1) gemäß einem der beiden vorangehenden Ansprüche, bei der der Signalgenerator (240) ein passives Tiefpaßfilter erster Ordnung aufweist, dessen Eingang das erste Signal (S4) empfängt und dessen Ausgang das zweite Signal (S5) erzeugt.

10. Dimmerschaltung (1) gemäß einem der vorangehenden Ansprüche, bei der die nicht stabilisierte Stufe (130) wenigstens einen Transistor (131) aufweist, der einen Verstärkungsfaktor von vorzugsweise mehr als 100 hat.

11. Dimmerschaltung (1) gemäß einem der vorangehenden Ansprüche, bei der eine Steuereinheit (30) vorgesehen ist, die von einem Benutzer betätigt werden kann und die dazu ausgelegt ist, ein Steuersignal (S8) an die Steuereinheit (40) zu übertragen, und bei der die Auswahleinheit (150) durch die Steuereinheit (40) gesteuert wird, um das nicht stabilisierte Synchronisationssignal (S3) zu wählen, wenn die Steuereinheit (30) betätigt wird.

12. Dimmerschaltung (1) gemäß dem vorangehenden Anspruch, bei der die Auswahlstufe (150) durch die Steuereinheit (40) gesteuert wird, um
- das nicht stabilisierte Synchronisationssignal (S3) während einer vorbestimmten Dauer, nachdem die Steuereinheit (30) nicht mehr betätigt worden ist, und dann
- das stabilisierte Synchronisationssignal (S6), solange die Steuereinheit (30) nicht erneut betätigt worden ist,
auszuwählen.

13. Dimmerschaltung (1) gemäß dem vorangehenden Anspruch, bei der die Steuereinheit (40) Mittel zum Messen der Verzögerung des stabilisierten Synchronisationssignals (S6) gegenüber dem nicht stabilisierten Synchronisationssignal (S3) aufweist.

14. Dimmerschaltung (1) gemäß einem der vorangehenden Ansprüche, bei der die Steuereinheit (40) einen Mikrocontroller aufweist und bei der die Auswahlstufe (150) im Mikrocontroller integriert ist.

15. Dimmerschaltung (1) gemäß einem der vorangehenden Ansprüche, bei der eine Dämpfungsstufe (110) vorgesehen ist, die zwischen dem Eingangsanschluß (2A) einerseits und der nicht stabilisierten (130) und der stabilisierten (200) Stufe andererseits zwischengeschaltet ist, wobei die Dämpfungsstufe (110) vorzugsweise ein passives Tiefpaßfilter erster Ordnung (111) aufweist.

## Claims

1. A dimmer (1) comprising:
- only two connection terminals (2A, 2B), comprising an input terminal (2A) for connecting to a local electricity network (2) and an output terminal (2B) for connecting to an electrical load (3);
- a power unit (10) that is interposed between said connection terminals (2A, 2B) to cut off periodically a fraction of the voltage delivered to said output terminal (2B) ;
- a driver unit (40) adapted to control said power unit (10) to modify the cutoff duration of the voltage delivered to said outlet terminal (2B); and
- a synchronizer unit (100) for synchronizing the driver unit (40);
the dimmer being **characterized in that** said synchronizer unit (100) comprises:
- a non-stabilized stage (130) that is adapted to deliver a non-stabilized synchronization signal (S3) that is synchronized on the voltage applied to said input terminal (2A);
- a stabilized stage (200) comprising a buffer filter (220) followed by a stabilizer filter (230), which stabilizer stage is adapted to deliver a periodic stabilized synchronization signal (S6), synchronized on the voltage that is applied to said input terminal (2A) and that is then filtered by said buffer filter (220) and stabilizer filter (230); and
- a selector stage (150) for selecting one or the other of said stabilized and non-stabilized synchronization signals (S6, S3).

2. A dimmer (1) according to the preceding claim, wherein said buffer filter (220) presents input impedance that is high, at least greater than 1 megohm (MOhm).

3. A dimmer (1) according to the preceding claim, wherein said buffer filter (220) includes an operational amplifier (221) connected as a voltage follower.

4. A dimmer (1) according to any preceding claim, wherein said stabilizer filter (230) includes an operational amplifier (231) connected as a lowpass filter.

5. A dimmer (1) according to the preceding claim, wherein said lowpass filter connection is of the second order.

6. A dimmer (1) according to any preceding claim, wherein said stabilized stage (200) includes, at the input of said buffer filter (220), a passive lowpass filter (210) of the first order.

7. A dimmer (1) according to any preceding claim, wherein said stabilizer filter (230) issues a first periodic signal (S4), and said stabilized stage (200) includes:
- a signal generator (240) that delivers a second signal (S5); and
- a comparator (250) that generates said stabilized synchronization signal (S6) as a function of said first signal (S4) and of said second signal (S5).

8. A dimmer (1) according to the preceding claim, wherein said driver unit (40) includes a microcontroller and wherein said comparator (250) is integrated in said microcontroller.

9. A dimmer (1) according to either one of the two preceding claims, wherein said signal generator (240) includes a passive lowpass filter of the first order, having its input receiving the first signal (S4) and having its output generating the second signal (S5).

10. A dimmer (1) according to any preceding claim, wherein said non-stabilized stage (130) includes at least one transistor (131) that presents gain that is preferably greater than 100.

11. A dimmer (1) according to any preceding claim, wherein a control unit (30) is provided that can be actuated by a user and that is adapted to transmit a control signal (S8) to said driver unit (40), and wherein said selector stage (150) is driven by said driver unit (40) to select the non-stabilized synchronization signal (S3) when said control unit (30) is actuated.

12. A dimmer (1) according to the preceding claim, wherein said selector stage (150) is driven by said driver unit (40) to select:
- the non-stabilized synchronization signal (S3) for a predetermined duration after said control unit (30) is no longer actuated; and then
- the stabilized synchronization signal (S6) so long as the control unit (30) is not actuated again.

13. A dimmer (1) according to the preceding claim, wherein said driver unit (40) includes means for measuring the delay of the stabilized synchronization signal (S6) relative to the non-stabilized synchronization signal (S3).

14. A dimmer (1) according to any preceding claim, wherein said driver unit (40) includes a microcontroller and wherein said selector stage (150) is incorporated in said microcontroller.

15. A dimmer (1) according to any preceding claim, wherein an attenuation stage (110) is provided interposed between firstly said input terminal (2A) and secondly each of the non-stabilized and stabilized stages (130, 200), said attenuator stage (110) preferably including a passive lowpass filter (111) of the first order.
